(19) Europäisches Patentamt

European Patent Office

Office européen des brevets

(11) **EP 1 207 464 A2**

(12) **EUROPEAN PATENT APPLICATION**

(43) Date of publication:
**22.05.2002 Bulletin 2002/21**

(51) Int Cl.$^7$: **G06F 17/30**

(21) Application number: **01301675.3**

(22) Date of filing: **23.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.11.2000 US 252391 P**
**20.12.2000 KR 2000079180**

(71) Applicants:
• **SAMSUNG ELECTRONICS CO. LTD.**
**Suwon-city, Kyungki-do (KR)**
• **THE REGENTS OF THE UNIVERSITY OF CALIFORNIA**
**Oakland, California 94607-5200 (US)**

(72) Inventors:
• **Choi, Yang-lim**
**Paldal-gu, Suwon-city, Kyungki-do (KR)**
• **Huh, Youngsik**
**Suwon-city, Kyungki-do (KR)**
• **Manjunath, Bangalore S.**
**Santa Barbara, CA 93106-9560 (US)**
• **Chandrasekaran, Shiv**
**Santa Barbara, CA 93106-9560 (US)**

(74) Representative: **Geary, Stuart Lloyd et al**
**Venner, Shipley & Co.,**
**20 Little Britain**
**London EC1A 7DH (GB)**

(54) **Database indexing using a tree structure**

(57) A database of data items, such as images or video, is indexed by using a tree structure. Each node (302, 304, 306, 308, 310, 312, 314, 316, 318, 320) of the tree structure relates to a region (202, 204, 206, 208, $206_1 + 206_2 + 206_3$, $206_{4\_2}+206_{4\_3}+206_{4\_4}$, $206_{4\_1}$, $208_1$, $208_2+208_3+208_4$) in a feature vector region. At least one of the terminal nodes (304, 312, 314, 316, 318, 320) of the tree indexes a composite region ($206_1+206_2+206_3$, $206_{4\_2}+206_{4\_3}+206_{4\_4}$, $208_2+208_3+208_4$) formed by combining a plurality of low population regions from the same index level.

**Description**

The present invention relates to a method of indexing a database according to features representable by vectors, the method comprising generating a tree structure, each node of which indexes a region of a feature vector space and to a database system including memory means storing data elements and memory means storing a feature vector index for said data elements, wherein said feature vector index comprises a plurality of indexing data elements in the form of a tree, each node of which indexes a region of a feature vector space.

Feature elements such as colour features and texture features of images or motion pictures can be represented by vectors. These vectors are called feature vectors. The feature vectors are indexed in a vector space in which the feature vectors exist such that a feature vector having features similar to a query vector can be found.

According to a conventional indexing method for a feature vector space, data partitioning and space divisional schemes based on a tree data structure such as an R tree or an X tree are utilized in indexing a low-dimensional feature vector space. Furthermore, a vector approximation (VA) approach is utilized in indexing a high-dimensional feature vector space. The VA approach involves indexing a high-dimensional feature vector space by determining vectors having similar features belong to the same hypercube.

However, indexing of feature vectors in a high-dimensional feature vector space according to the conventional indexing method based on VA may result in slow retrieval of a feature vector similar to a query vector from the feature vector space. Thus, there still remains a need for an indexing method which reduces the time required for retrieval.

A method according to the present invention is characterised in that generation of a terminal node of the tree comprises generating an index for a composite region consisting of a plurality of regions each having a population meeting a predetermined distribution criterion and being separated by no more than a predetermined distance in said feature vector space. The distribution criterion may be an absolute number of members or a population density. The predetermined distance may be zero, i.e. limited to adjoining regions.

Preferably, an indexing method according to the present invention comprises dividing a region of the feature vector space into a plurality of sub-regions, if the population of said region fails to meet said population distribution criterion, and adding a node to said tree structure indexing said region. More preferably, said composite region comprises a plurality of said sub-regions.

A database system according to the present invention is characterised in that a terminal node of the tree is an index for a composite region consisting of a plurality of regions each having a population meeting a predetermined distribution criterion and being separated by no more than a predetermined distance in said feature vector space.

Preferably, each said region indexed at the same level of the tree has the same size and the composite region comprises a plurality of said same size regions.

According to the present invention, there is provided a method of searching a database system according to the present invention, the method comprising:

identifying a terminal node indexing a region, of a feature vector space, containing a query vector;
determining a match criterion value on the basis of the contents of said region;
for a non-terminal node, determining whether the indexed region meets the match criterion and if not, excluding child nodes of said non-terminal node from the search;
repeating the preceding step for different non-terminal node until all non-terminal nodes have been tested for said match criterion or excluded; and
selecting data elements within the region or regions, indexed by the terminal nodes that are children of remaining non-terminal nodes, which meet a further match criterion with respect to the query vector.

Additional preferred and optional features are set out in the claims appended hereto.
Embodiments of the present invention will now be described, by way of example, with reference to the accompanying drawings, in which:

Figure 1 is a flowchart showing the main steps of a method of indexing a feature vector space according to the present invention;
Figure 2 shows an example of a feature vector space indexed by the method shown in Figure 1;
Figure 3 shows an example of a tree data structure for indexing the feature vector space of Figure 2 according to the present invention; and
Figure 4 is a flowchart showing the main steps of a method of retrieving a feature vector having features similar to a query vector from the feature vector space indexed by the indexing method of Figure 1.

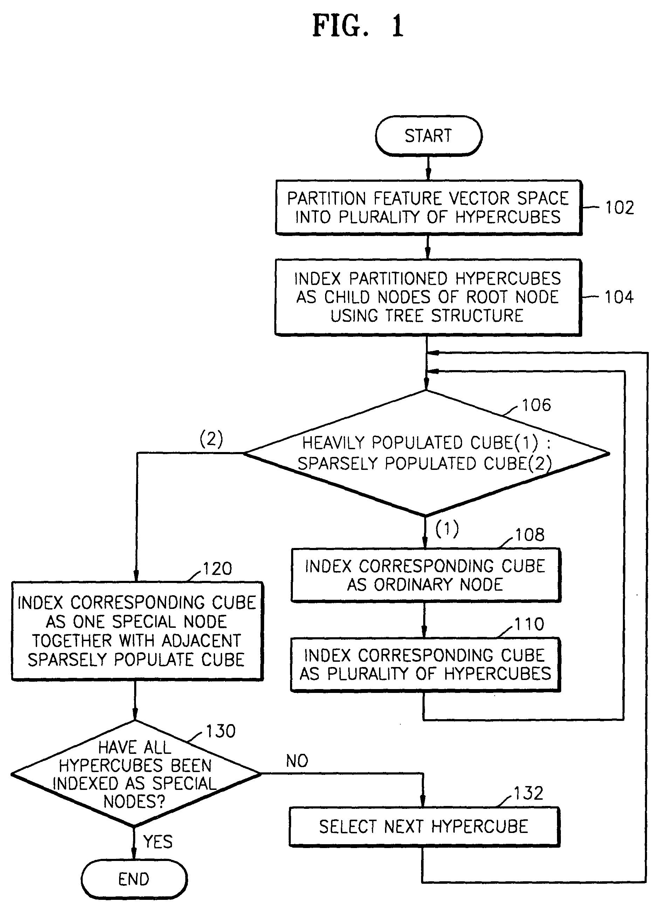

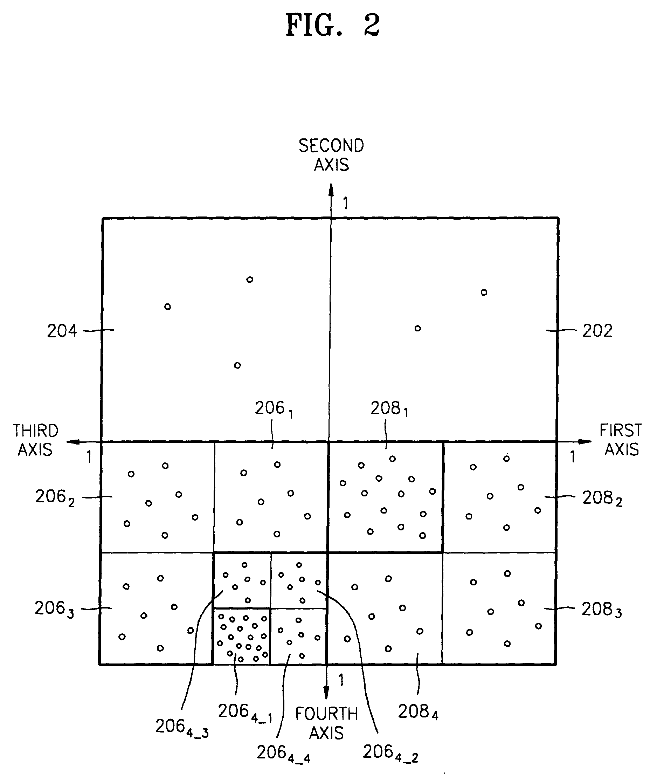

Referring to Figure 1, first, the feature vector space is partitioned into a plurality of hypercubes (step 102). Although this embodiment is described with reference to an example in which the feature vector space is partitioned into a plurality of hypercubes, the feature vector space may be partitioned into subspaces used in more improved indexing schemes such as random indexing, multi-dimensional scaling, Fast-map, and locality sensitive hashing. Figure 2 shows an example of a feature vector space indexed by the indexing method of Figure 1. Feature vectors in the feature vector space may be represented by an n-dimensional vector where n is a positive integer. In other words, assuming a database including N feature vectors is D where N is a positive integer, the feature vectors may be represented by an n-dimensional vector in the vector space $R^n$.

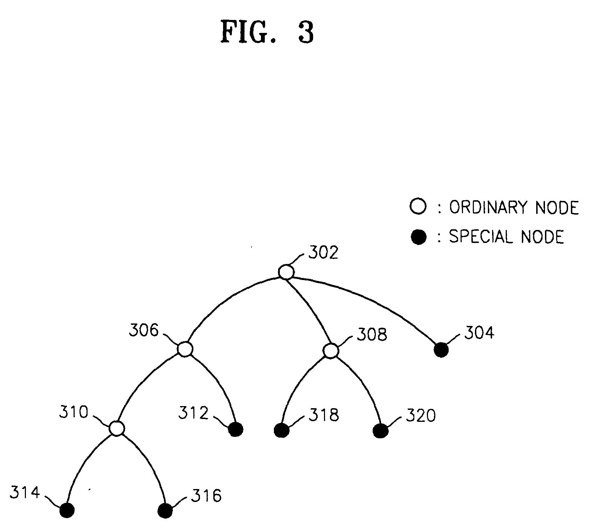

Next, the partitioned hypercubes are indexed as child nodes of a root node using a tree structure (step 104). The tree structure basically has a root node and a plurality of child nodes branched from the root node are classified in a tree form. Figure 3 shows an example of a tree data structure for indexing the feature vector space of Figure 2 in accordance with the present invention.

Next, an arbitrary hypercube, which is one of the child nodes of a root node 302, is selected to determine whether the hypercube is heavily or sparsely populated (step 106). Here, if the root node 302 is an initial hypercube $[0,1]^n$, and the child nodes of the root node are subcubes of $[0,1]^n$. The root node 302 is considered to be in level 0. The child nodes of the root node 302 are in level 1 and the child nodes of the child nodes of the root node are in level 2.

If the selected hypercube is determined to be heavily populated in the step 106, the corresponding hypercube is indexed as an ordinary node (step 108) and partitioned into a plurality of hypercubes (step 110). On the other hand, if the selected hypercube is determined to be sparsely populated in the step 106, the corresponding hypercube is indexed as one special node together with adjacent sparsely populated hypercubes (step 120). Although this embodiment has been described with reference to an example in which the corresponding hypercube determined to be sparsely populated is indexed as one special node together with adjacent sparsely populated hypercubes, it is possible to index the corresponding hypercube determined to be sparsely populated as one special node together with another sparsely populated hypercube which is spaced apart by a distance less than a predetermined distance. Next, in case where the corresponding hypercube is partitioned into a plurality of hypercubes, the steps after 106 are repeatedly performed on each of the partitioned hypercubes.

In this embodiment, referring to Figures 2 and 3, a hypercube 202 determined to be sparsely populated and a hypercube 204 are indexed as a special node 304. On the other hand, a hypercube 206 determined to be heavily populated and a hypercube 208 are indexed as ordinary nodes 306, 308. Also, the hypercube determined to be heavily populated is partitioned into a plurality of sub-hypercubes $206_1$, $206_2$, $206_3$, $206_4$. It is determined whether the partitioned sub-hypercubes $206_1$, $206_2$, $206_3$, and $206_4$ are heavily or sparsely populated, and for example, the hypercube $206_4$ determined to be heavily populated is indexed as an ordinary node 310. On the other hand, the sub-hypercubes $206_1$, $206_2$, $206_3$ determined to be sparsely populated, are indexed as one special node 312. The sub-hypercube $206_4$ determined to be heavily populated is partitioned into a plurality of sub-sub-hypercubes $206_{4\_1}$, $206_{4\_2}$, $206_{4\_3}$, and $206_{4\_4}$. Next, it is determined whether the partitioned sub-sub-hypercubes $206_{4\_1}$, $206_{4\_2}$, $206_{4\_3}$, $206_{4\_4}$ are heavily or sparsely populated and the sub-sub-hypercube $206_{4\_1}$, determined to be heavily populated, is indexed as an ordinary node. The cube $206_{4\_1}$ determined to be heavily populated is partitioned into a plurality of sub-sub-sub-hypercubes, in which case all partitioned cubes are determined to be sparsely populated and thus indexed as ordinary nodes 314. On the other hand, the sub-sub-hypercubes $206_{4\_2}$, $206_{4\_3}$, $206_{4\_4}$ determined to be sparsely populated are indexed as special nodes 316.

Now, it is determined whether all hypercubes are indexed as special nodes (step 130) and if it is determined that all hypercubes are not indexed as special nodes, the next hypercube is selected (step 132) for repeated performance of the steps after 106. On the other hand, if it is determined that all hypercubes are indexed as special nodes, indexing is finished.

That is, returning to Figure 2, the hypercube 208 determined to be heavily populated is partitioned into a plurality of sub-hypercubes $208_1$, $208_2$, $208_3$, $208_4$. Next, it is determined whether the partitioned sub-hypercubes $208_1$, $208_2$, $208_3$, $208_4$ are heavily or sparsely populated, and the hypercube $208_1$ determined to be heavily populated is indexed as an ordinary node. However, the hypercube $208_1$ is partitioned into a plurality of sub-sub-hypercubes, in which case all partitioned cubes are determined to be sparsely populated and thus indexed as ordinary nodes 318. On the other hand, the cubes $208_2$, $208_3$, $208_4$ determined to be sparsely populated are indexed by a special node 320.

It will be appreciated that, in the foregoing, the tree is represented physically within the memory of a database system which also has memory storing the items indexed by the tree.

A method of retrieving a feature vector having features similar to a query vector in the feature vector space indexed according to the indexing method described above will now be described.

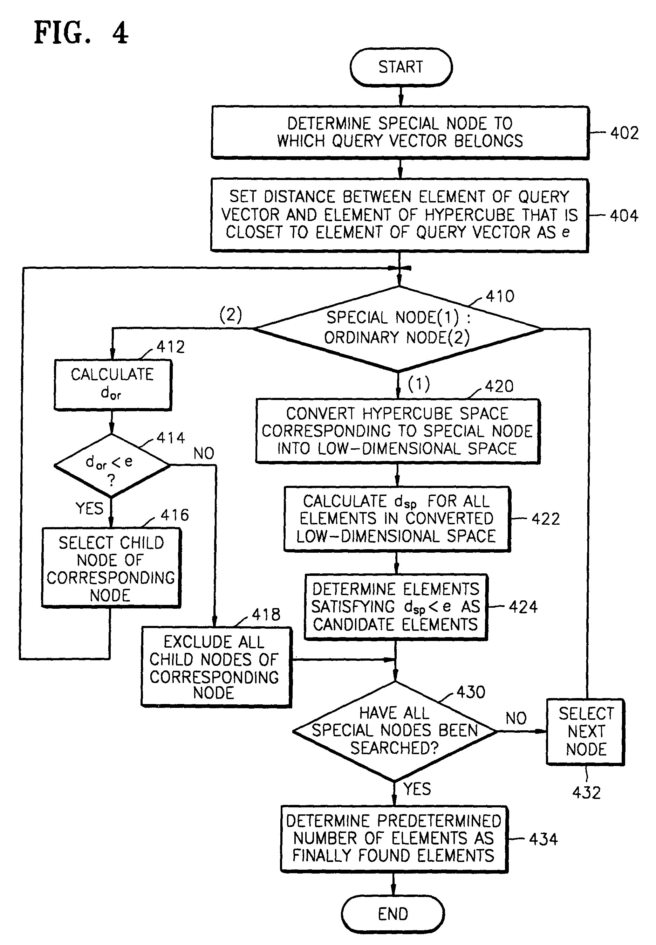

Figure 4 is a flowchart showing the main steps of a method of retrieving a feature vector having features similar to a query vector in the feature vector space indexed by the indexing method for a feature vector space shown in Figure 1. Hereinafter, a query vector in the feature vector space $R^n$ corresponding to the database D is denoted by q, and it is assumed that the query vector q lies in a feature space defined as $[0,1]^n$ where the n a positive integer denoting the dimensionality of a feature vector space for describing feature vectors. Under the above assumptions, the following steps are performed so as to find an element of the database which is the closest to the query vector q, that is, a feature vector.

First, the special node, to which the query vector, q, belongs, is determined (step 402). Then, the smallest distance, e, between the query vector and an element in the hypercube, corresponding to the special node to which the query vector belongs, is determined (step 404).

It is possible that the closest element is in a hypercube adjacent to that containing the query vector, for instance if both are close to a boundary between their respective hypercubes. In order to find any such elements, a starting node is selected from among child nodes of the root node 302. It is then determined whether the selected node is a special node or an ordinary node (step 410). If the selected node is determined to be an ordinary node in the step 410, the distance $d_{or}$ between the query vector q and the hypercube $n_{or}$, indexed by the selected node is calculated by Equation (1) (step 412):

$$d_{or} = d(q, n_{or}) = \sum_i \begin{cases} |q_i - a_i|^2 & \text{when } q_i > a_i \\ 0 & \text{when } a_i > q_i > b_i \quad \ldots(1) \\ |q_i - a_i|^2 & \text{when } b_i > q_i \end{cases}$$

Here, arbitrary interval $a \leq x \leq b$ may be represented as pair (a, b), and hypercube

$$\prod_{1 \leq i \leq n} (a_i, b_i)$$

may be represented by sequence of intervals $(a_i, b_i)$. Consequently, $d_{or}$ is 0 if it contains the query vector and non-zero if it does not contain the query vector.

Next, it is determined whether $d_{or}$ is less than e (step 414), and if $d_{or}$ is determined to be less than e, the search moves down one level of the tree and a child node of the current ordinary node is selected (step 416). Also, if $d_{or}$ <e, it is preferable that the value of e is set to $d_{or}$. In particular, this is preferable if an index or search structure is to be designed for quickly finding only the closest element to the query vector. On the other hand, if $d_{or}$ is determined to be greater than or equal to e, all child nodes of the corresponding node are excluded for the search (step 418).

If the selected node is determined to be a special node at step 410, the hypercube space corresponding to the node is converted into a low-dimensional space (step 420). That is, if the query vector q is determined to lie in a sparsely populated region in step 410, the query vector q is projected into a low-dimensional subspace corresponding to the query vector q.

Next, the distance $d_{sp}$ between the query vector q and each element v in the hypercube $n_{sp}$ indexed by the special node are calculated by Equation (2) (step 422):

$$d_{sp} = d(q, n_{sp}) = \min_{v \in n_{sp}} d(q, v) \ldots(2)$$

Next, elements that satisfy $d_{sp}$ < e are determined an established as candidate elements (step 424). In this case, although not shown in Figure 4, it is preferable that e is updated with $d_{sp}$ if an element that satisfies $d_{sp}$ < e exist. In particular, this is preferable if an index or search structure is to be designed for quickly finding only the closest element to the query vector.

Next, it is determined whether the search has covered all of specific nodes (step 430) that have not been excluded at step s418 and, if it is not all of the non-excluded special nodes have been searched, the new node is selected (step 432), and then the steps after 410 are performed recursively. On the other hand, if all non-excluded special nodes are determined to have be searched, a predetermined number of candidate elements, or less if there are insufficient candidate elements, are selected as the query result (step 440).

According to the above retrieval method, if the distance $d_{or}$ between the query vector q and an element is greater than or equal to a predetermined threshold value e determined as the closest distance between the query vector q and an element in a hypercube corresponding to the special node to which the query vector q belongs, all child nodes of the corresponding node are excluded from a similarity search and hypercubes corresponding to the nodes branched from all excluded child nodes ceases to be utilized in the similarity measurement for the query vector q. Furthermore, quicker retrievals can be provided by repeatedly updating the predetermined threshold value e used in the similarity measurement.

That is, a high-dimensional feature vector space indexed by the method of indexing a feature vector space according to the present invention can support functions such as similarity search, retrieval or browsing in a salable and efficient manner. Thus, even if the size of a database increases, the time required for similarity search and retrieval does not increases as much.

Furthermore, the method of indexing and searching a feature vector space according to the present invention can be written as a program executed on a personal or server computer. The program codes and code segments constructing the program can be easily inferred by computer programmers in the industry. Furthermore, the program can be stored in a computer-readable recording medium. The recording medium may be a magnetic recording medium or an optical recording medium. The program may also be in the form of an electric or electromagnetic signal.

### Claims

1. A method of indexing a database according to features representable by vectors, the method comprising generating a physical representation of a tree structure, each node (302, 304, 306, 308, 310, 312, 314, 316, 318, 320) of which indexes a region (202, 204, 206, 208, $206_1 + 206_2 + 206_3$, $206_{4\_2} + 206_{4\_3} + 206_{4\_4}$, $206_{4\_1}$, $208_1$, $208_2 + 208_3 + 208_4$) of a feature vector space, **characterised in that** generation of a terminal node (304, 312, 314, 316, 318, 320) of the tree comprises generating an index for a composite region ($206_1 + 206_2 + 206_3$, $206_{4\_2} + 206_{4\_3} + 206_{4\_4}$, $208_2 + 208_3 + 208_4$) consisting of a plurality of regions each having a population meeting a predetermined distribution criterion and being separated by no more than a predetermined distance in said feature vector space.

2. A method according to claim 1, comprising dividing a region (206, $206_4$, 208) of the feature vector space into a plurality of sub-regions ($206_1$, $206_2$, $206_3$, $206_4$, $206_{4\_1}$, $206_{4\_2}$, $206_{4\_3}$, $206_{4\_4}$, $208_1$, $208_2$, $208_3$, $208_4$) if the population of said region fails to meet said population distribution criterion, and adding a node (302, 306, 308, 310) to said tree structure indexing said region.

3. A method according to claim 2, wherein said composite region ($206_1 + 206_2 + 206_3$, $206_{4\_2} + 206_{4\_3} + 206_{4\_4}$, $208_2 + 208_3 + 208_4$) comprises a plurality of said sub-regions ($206_1$, $206_2$, $206_3$, $206_{4\_2}$, $206_{4\_3}$, $206_{4\_4}$, $208_2$, $208_3$, $208_4$).

4. A database system including memory means storing data elements and memory means storing a feature vector index for said data elements, wherein said feature vector index comprises a plurality of indexing data elements (302, 304, 306, 308, 310, 312, 314, 316, 318, 320) in the form of a tree, each node (302, 304, 306, 308, 310, 312, 314, 316, 318, 320) of which indexes a region (202, 204, 206, 208, $206_1 + 206_2 + 206_3$, $206_{4\_2} + 206_{4\_3} + 206_{4\_4}$, $206_{4\_1}$, $208_1$, $208_2 + 208_3 + 208_4$) of a feature vector space, **characterised in that** a terminal node (304, 312, 314, 316, 318, 320) of the tree is an index for a composite region ($206_1 + 206_2 + 206_3$, $206_{4\_2} + 206_{4\_3} + 206_{4\_4}$, $208_2 + 208_3 + 208_4$) consisting of a plurality of regions ($206_1$, $206_2$, $206_3$, $206_{4\_2}$, $206_{4\_3}$, $206_{4\_4}$, $208_2$, $208_3$, $208_4$) each having a population meeting a predetermined distribution criterion and being separated by no more than a predetermined distance in said feature vector space.

5. A database system according to claim 4, wherein each said region (202, 204, 206, 208, $206_1 + 206_2 + 206_3$, $206_{4\_2} + 206_{4\_3} + 206_{4\_4}$, $206_{4\_1}$, $208_1$, $208_2 + 208_3 + 208_4$) indexed at the same level of the tree has the same size and the composite region ($206_1 + 206_2 + 206_3$, $206_{4\_2} + 206_{4\_3} + 206_{4\_4}$, $208_2 + 208_3 + 208_4$) comprises a plurality of said same size regions ($206_1$, $206_2$, $206_3$, $206_{4\_2}$, $206_{4\_3}$, $206_{4\_4}$, $208_2$, $208_3$, $208_4$).

6. A method of searching a database system according to claim 4 or 5, the method comprising:

   identifying a terminal node (304, 312, 314, 316, 318, 320) indexing a region (202, 204, $206_1 + 206_2 + 206_3$, $206_{4\_1}$, $206_{4\_2} + 206_{4\_3} + 206_{4\_4}$, $208_1$, $208_2 + 208_3 + 208_4$), a feature vector space, containing a query vector;
   determining a match criterion value on the basis of the contents of said region (202, 204, $206_1 + 206_2 + 206_3$, $206_{4\_1}$, $206_{4\_2} + 206_{4\_3} + 206_{4\_4}$, $208_1$, $208_2 + 208_3 + 208_4$);
   for a non-terminal node (302, 306, 308, 310), determining whether the indexed region (202, 204, 206, $206_4$, 208) meets the match criterion and if not, excluding child nodes (304, 306, 308, 310, 312, 314, 316, 318, 320) of said non-terminal node (302, 306, 308, 310) from the search;
   repeating the preceding step for different non-terminal nodes (302, 306, 308, 310) until all non-terminal nodes (302, 306, 308, 310) have been tested for said match criterion or excluded; and

selecting data elements within the region or regions (202, 204, $206_1+206_2+206_3$, $206_{4\_1}$, $206_{4\_2}+206_{4\_3}+206_{4\_4}$, $208_1$, $208_2+208_3+208_4$), indexed by the terminal nodes (304, 312, 314, 316, 318, 320) that are children of remaining non-terminal nodes (302, 306, 308, 310), which meet a further match criterion with respect to the query vector.

**7.** A method of indexing a feature vector space using a tree structure, the method comprising the step of indexing an approximation region in which feature vector elements are sparsely distributed as one special node belonging to a child node of the tree data structure, together with another sparsely distributed approximation region spaced apart by a distance less than a predetermined distance.

**8.** A method of indexing a feature vector space comprising the steps of:

(a) partitioning the feature vector space into a plurality of approximation regions;
(b) selecting an arbitrary approximation region to determine whether the selected approximation region is heavily or sparsely distributed; and
(c) if the approximation region is determined to be sparsely distributed, indexing the corresponding approximation region as one special node belonging to a child node of the tree data structure, together with another sparsely distributed approximation region spaced apart by a distance less than a predetermined distance.

**9.** The method of claim 8, wherein the steps (b) and (c) are repeatedly performed on all approximation regions partitioned in the step (a).

**10.** The method of claim 8 or 9, prior to the step (c), further comprising the step of (c-1) if the approximation region selected in the step (b) is determined to be heavily distributed, indexing the corresponding approximation region as an ordinary node, partitioning the corresponding approximation region into a plurality of sub approximation regions, and repeating the step (b) for the partitioned sub approximation regions.

**11.** The method of claim 10, wherein the steps (b) and (c) are performed on all approximation regions partitioned in the step (a).

**12.** The method of claim 8 or 9, after the step (c), further comprising the steps of:

(d) determining whether all approximation regions are indexed as special nodes;
(e) if all approximation regions are not indexed as special nodes, selecting the next approximation region and performing the steps after (b) on the approximation region repeatedly; and
(f) if all approximation regions are indexed as special nodes, completing the indexing.

**13.** The method of claim 6, wherein the plurality of approximation regions are subspaces used in random indexing.

**14.** The method of claim 6, wherein the plurality of approximation regions are subspaces used in multi-dimensional scaling (MDS), Fast-map, or locality sensitive hashing.

**15.** The method of claim 8, wherein the step (c) comprises the step of (c') if the approximation region is determined to be sparsely distributed, indexing the corresponding approximation region as one special node belonging to a child node of the tree data structure together with an adjacent sparsely distributed approximation region.

**16.** A method of retrieving a feature vector having features similar to a query vector from a vector space indexed by an indexing method using a tree structure including the step of indexing an approximation region in which feature vector elements are sparsely distributed as one special node belonging to a child node of the tree data structure, together with another sparsely distributed approximation region spaced apart by a distance less than a predetermined distance, the retrieval method comprising the steps of:

(a) determining a special node to which the query vector belongs;
(b) setting the distance between an element of the query vector and an element in an approximation region corresponding to the determined special node, which is the closest to the element of the query vector, as a first threshold value; and
(c) excluding all child nodes of the corresponding node if the distance between the query vector and the approximation region indexed as an ordinary node is greater than or equal to the first threshold value.

**17.** The method of claim 16, prior to the step (c) further comprising the step of (c') selecting an arbitrary node among child nodes of a root node and determining whether the selected node is a special or ordinary node.

**18.** The method of claim 17, wherein the step (c) comprises the steps of:

(c-1) if the selected node is determined to be an ordinary node in the step (c'), calculating the distance the distance $d_{or}$ between the query vector q and the approximation region $n_{or}$ indexed as the ordinary node by:

$$d_{or} = d(q, n_{or}) = \sum_i \begin{cases} |q_i - a_i|^2 \text{ when } q_i > a_i \\ 0 \text{ when } a_i > q_i > b_i \\ |q_i - a_i|^2 \text{ when } b_i > q_i \end{cases}$$

(c-2) determining whether the distance $d_{or}$ between the query vector q and the approximation region $n_{or}$ indexed as the ordinary node is less than the first threshold value;
(c-3) if the distance $d_{or}$ between the query vector q and the approximation region $n_{or}$ indexed as the ordinary node is less than the first threshold value, selecting child nodes of the corresponding node; and
(c-4) if the distance $d_{or}$ between the query vector q and the approximation region $n_{or}$ indexed as the ordinary node is greater than or equal to than the first threshold value, excluding all child nodes of the corresponding node.

**19.** The method of claim 16, after the step (c-2), further comprising the step of updating the first threshold value with the distance $d_{or}$ if the distance $d_{or}$ is less than the first threshold value.

**20.** The method of claim 11, after the step (c'), further comprising the step of if the selected node is determined to be a special node in the step (c'), converting a space of approximation region corresponding to the special node into a low-dimensional space.

**21.** The method of claim 12, after the step (c'), further comprising the steps of:

(c-5) if the node selected in the step (c') is determined to be a special node, converting a space of approximation region corresponding to the node into a low-dimensional space;
(c-6) calculating the distance $d_{sp}$ between the query vector q and each element v in the approximation region $n_{sp}$ indexed as the special node by:

$$d_{sp} = d(q, n_{sp}) = \min_{v \in n_{sp}} d(q, v)$$

(c-7) determining elements that satisfy the requirement of the distance $d_{sp}$ being less than the first threshold value as candidate elements.

**22.** The method of claim 21, after the step (c-7), further comprising the step of updating the first threshold value with the distance $d_{sp}$ if an element that satisfies the requirement of the distance $d_{sp}$ being less than the first threshold value exists.

**23.** The method of claim 18 or 19, after the step (c-4), further comprising the steps of:

determining whether all special nodes are searched;
selecting the next node to perform the steps after (c-1) repeatedly if all special nodes are not searched;
determining a predetermined number of elements as finally found elements if all special nodes are searched.

# FIG. 1

```
                    ( START )
                        │
                        ▼
        ┌──────────────────────────────┐
        │ PARTITION FEATURE VECTOR SPACE│── 102
        │ INTO PLURALITY OF HYPERCUBES  │
        └──────────────────────────────┘
                        │
                        ▼
        ┌──────────────────────────────┐
        │  INDEX PARTITIONED HYPERCUBES │
        │  AS CHILD NODES OF ROOT NODE  │── 104
        │     USING TREE STRUCTURE      │
        └──────────────────────────────┘
                        │
                        ▼
                      ◇ 106
        (2)     HEAVILY POPULATED CUBE(1) :
        ◀───    SPARSELY POPULATED CUBE(2)
        │                 │ (1)
        │                 ▼
        │       ┌──────────────────────────┐
        │       │ INDEX CORRESPONDING CUBE │── 108
        │       │     AS ORDINARY NODE      │
        │       └──────────────────────────┘
        │                 │
        ▼                 ▼
┌─────────────────┐   ┌──────────────────────────┐
│ INDEX           │   │ INDEX CORRESPONDING CUBE │── 110
│ CORRESPONDING   │   │ AS PLURALITY OF HYPERCUBES│
│ CUBE AS ONE     │── 120  └───────────────────────┘
│ SPECIAL NODE    │
│ TOGETHER WITH   │
│ ADJACENT        │
│ SPARSELY        │
│ POPULATE CUBE   │
└─────────────────┘
        │
        ▼
      ◇ 130
   HAVE ALL              NO    ┌──────────────────────┐
   HYPERCUBES BEEN ───────────▶│ SELECT NEXT HYPERCUBE │── 132
   INDEXED AS SPECIAL          └──────────────────────┘
   NODES?
        │ YES
        ▼
     ( END )
```

# FIG. 2

# FIG. 3

○ : ORDINARY NODE
● : SPECIAL NODE

# FIG. 4

START

DETERMINE SPECIAL NODE TO
WHICH QUERY VECTOR BELONGS — 402

SET DISTANCE BETWEEN ELEMENT OF QUERY
VECTOR AND ELEMENT OF HYPERCUBE THAT IS — 404
CLOSET TO ELEMENT OF QUERY VECTOR AS $e$

410
SPECIAL NODE(1) :
ORDINARY NODE(2)

(2)

412
CALCULATE
$d_{or}$

414
$d_{or} < e$
?

NO

YES

416
SELECT CHILD
NODE OF
CORRESPONDING
NODE

418
EXCLUDE ALL
CHILD NODES OF
CORRESPONDING
NODE

(1) 420
CONVERT HYPERCUBE SPACE
CORRESPONDING TO SPECIAL NODE
INTO LOW−DIMENSIONAL SPACE

CALCULATE $d_{sp}$ FOR ALL
ELEMENTS IN CONVERTED — 422
LOW−DIMENSIONAL SPACE

DETERMINE ELEMENTS
SATISFYING $d_{sp} < e$ AS — 424
CANDIDATE ELEMENTS

430
HAVE ALL
SPECIAL NODES BEEN
SEARCHED?

NO

SELECT
NEXT
NODE

432

YES

DETERMINE PREDETERMINED
NUMBER OF ELEMENTS AS — 434
FINALLY FOUND ELEMENTS

END